# EUROPÄISCHE PATENTSCHRIFT

(11) **EP 2 602 099 B1**
(45) Veröffentlichungstag und Bekanntmachung des Hinweises auf die Patenterteilung: **12.02.2014**
(21) Anmeldenummer: 11009671.6
(22) Anmeldetag: 08.12.2011
(51) Int. Cl.: B29D 11/00, B65G 47/91, B25J 15/06, G02C 7/02

(54) **Sauggreifer und Handhabungssystem für Kontaktlinsen**
Vacuum gripper and handling system for contact lenses
Pince aspirante et système de manipulation pour lentilles de contact

(43) Veröffentlichungstag der Anmeldung: 12.06.2013
(73) Patentinhaber: Harro Höfliger Verpackungsmaschinen GmbH, 71573 Allmersbach im Tal (DE)
(72) Erfinder: Straub, Klaus, 71522 Backnang (DE)
(74) Vertreter: Zurhorst, Stefan

(56) Entgegenhaltungen:
- WO-A1-2008/012152
- US-A- 5 092 954
- US-A1- 2009 256 371

## Beschreibung

Die Erfindung betrifft einen Sauggreifer für das Umsetzen von ophthalmischen Linsen gemäß dem Oberbegriff des Anspruchs 1, insbesondere von Kontaktlinsen aus einem Bereitstellungsnapf in einen Zentriernapf, ein Handhabungssystem für ophthalmische Linsen mit einem derartigen Sauggreifer sowie die Verwendung gemäß dem Oberbegriff des Anspruchs 11 eines solchen Sauggreifers für das Umsetzen von ophthalmischen Linsen aus einem Bereitstellungsnapf in einen Zentriernapf.

Ophthalmische Linsen, wie Intraokularlinsen und insbesondere Kontaktlinsen aus Kunststoff werden üblicherweise in einer Form gegossen und nach der Entnahme aus der Gießform in einem Bereitstellungsnapf für die weitere Handhabung bereitgehalten.

Beispielhaft für ophthalmische Linsen und ähnliche Gegenstände wird nachfolgend auf Kontaktlinsen Bezug genommen. Der Bereitstellungsnapf ist deutlich größer als die darin zwischengelagerte Kontaktlinse, so dass sich die Kontaktlinse darin in einer undefinierten Lage befindet. Aus dieser ungeordneten Lage muss die feuchte Kontaktlinse gegriffen und in die Endverpackung überführt werden. Für das Aufgreifen und das Überführen von Kontaktlinsen sind beispielsweise aus der WO 2008/012152 A1 Sauggreifer bekannt, die eine Kontaktlinse ansaugen und im angesaugten Zustand zum Zielort tragen können. Die Endverpackung der Kontaktlinse ist aber nur unwesentlich größer als das Nennmaß der Kontaktlinse. Damit eine Kontaktlinse in der Zielverpackung abgelegt werden kann, muss der hierfür vorgesehene Sauggreifer hinreichend klein sein, um samt der daran anhaftenden Kontaktlinse in den Zielbehälter eingeführt werden zu können.

Um eine Kontaktlinse mit einem derartig kleinen Sauggreifer ansaugen und anheben zu können, ist eine exakte gegenseitige Lageausrichtung von Kontaktlinse und Sauggreifer erforderlich. Eine solche exakte Lageausrichtung ist aber nach obigen Ausführungen in einem übergroßen, d.h. im Vergleich zur Endverpackung deutlich größeren Bereitstellungsnapf nicht gegeben. Die ungeordnete, zufällige Lage der Kontaktlinsen in den ihnen zugeordneten Bereitstellungsnäpfen führt dazu, dass die in einem automatisierten Prozess eingeführten Sauggreifer die jeweils dort befindlichen Kontaktlinsen nicht oder nicht zuverlässig ansaugen und aufgreifen können.

Ein weiteres Problem bei der Handhabung solcher Kontaktlinsen besteht darin, dass sie nicht austrocknen dürfen und deshalb dauerhaft feucht gehalten werden müssen. Entsprechende Handhabungsvorrichtungen müssen also in der Lage sein, die Kontaktlinsen im feuchten Zustand zu ergreifen und zu transportieren. Dabei gilt es auch zu beachten, dass die Verschleppung von während der Handhabung genutzter Flüssigkeit in den Verpackungsbehälter vermieden wird. Außerdem sind die Kontaktlinsen flexibel. Es muss deshalb bei der Handhabung vermieden werden, dass sich die Kontaktlinsen überdehnen oder gar umklappen.

In der US 5,092,954 ist ein Sauggreifer für das Anheben und den Transport von mehrschichtigen, flächigen und flexiblen Bauteilen wie Kfz-Verkleidungsteilen bekannt. Der gezeigte Sauggreifer umfasst einen Saugkopf mit mehreren Saugöffnungen und mit mehreren Saugnäpfen, wobei die Saugnäpfe auf einer konvex gerundeten Fläche angeordnet sind. Die Saugöffnungen sind in den Saugnäpfen angeordnet, wodurch die Saugnäpfe mit Unterdruck beaufschlagt werden können. Unter Einwirkung dieses Unterdruckes schmiegt sich das mehrschichtige, flächige und flexible Bauteil an die konvex gerundete Fläche des Sauggreifers an und kann angehoben werden.

Der Erfindung liegt die Aufgabe zugrunde, einen Sauggreifer anzugeben, mit dem ein zuverlässiges Ansaugen und Aufgreifen einer ungeordnet in einem übergroßen Bereitstellungsnapf liegenden ophthalmischen Linse möglich ist.

Diese Aufgabe wird durch einen Sauggreifer mit den Merkmalen des Anspruchs 1 gelöst.

Der Erfindung liegt des Weiteren die Aufgabe zugrunde, ein Handhabungssystem für ophthalmische Linsen anzugeben, mittels dessen eine ungeordnet in einem übergroßen Bereitstellungsnapf liegende ophthalmische Linse in eine zentrierte Position als Zwischenschritt zur Überführung in die zugeordnete Endverpackung gebracht werden kann. Diese Aufgabe wird durch ein Handhabungssystem mit den Merkmalen des Anspruchs 6 gelöst.

Nach der Erfindung ist ein Sauggreifer für das Umsetzen von ophthalmischen Linsen, insbesondere von Kontaktlinsen aus einem Bereitstellungsnapf in einen Zentriernapf vorgesehen. Der Sauggreifer umfasst einen Saugkopf mit mehreren Saugöffnungen und mit mehreren Saugnäpfen, wobei die Saugnäpfe auf einer konvex gerundeten Fläche angeordnet sind. Zumindest ein Teil der Saugöffnungen ist dabei in den Saugnäpfen angeordnet. Mindestens eine und insbesondere mehrere Saugöffnungen sind abseits der Saugnäpfe im Saugkopf angeordnet.

Unter Ausnutzung der Flexibilität der ophthalmischen Linse oder eines vergleichbaren Gegenstandes können die Saugnäpfe hart sein. Die zweckmäßig weichen, flexiblen, bevorzugt aus einem Elastomer bestehenden Saugnäpfe sind für das Ansaugen und Halten der ophthalmischen Linsen verantwortlich. Da die Saugnäpfe mit den integrierten Saugöffnungen auf einer konvex gerundeten Fläche angeordnet sind, ist ein Teil von ihnen immer der ophthalmischen Linse zugewandt, unabhängig von deren zufälliger Lage im übergroßen Bereitstellungsnapf. Ungeachtet der zufälligen Linsenposition treffen mindestens ein Saugnapf, bevorzugt mehrere Saugnäpfe auf die Linse, wobei mittels der zugeordneten Saugöffnungen der für das Ansaugen und Halten erforderliche Unterdruck aufgebracht wird. An den Saugöffnungen der übrigen nicht mit der ophthalmischen Linse in Berührung stehenden Saugnäpfe und ggf. auch an weiteren Saugöffnungen ohne Saugnapf liegt ebenfalls ein Unterdruck an, wodurch Restflüssigkeit abgesaugt wird, die sich möglicherweise in der konkaven Seite der ophthalmischen Linse angesammelt hat. Die insbesondere weichen Saugnäpfe verhindern eine Beschädigung der empfindlichen ophthalmischen Linse und erzeugen eine hohe Haftkraft. Die Absaugung der Restflüssigkeit verhindert bzw. reduziert eine Verschleppung von Flüssigkeit in den Zielbehälter.

In dem erfindungsgemäßen Handhabungssystem und den zugeordneten Verfahrensschritten wird die ungeordnet in dem Bereitstellungsnapf liegende ophthalmische Linse mittels des erfindungsgemäßen Sauggreifers angesaugt. Gleichzeitig wird auch Restflüssigkeit abgesaugt. Die an mindestens einem Saugnapf des Sauggreifers haftende ophthalmische Linse wird aus dem Bereitstellungsnapf angehoben und in einen Zentriernapf umgesetzt. Der Zentriernapf ist vorteilhaft ebenfalls mit Flüssigkeit gefüllt, um u.a. auch ein Austrocknen der ophthalmischen Linse zu verhindern. Insbesondere bewirkt die Flüssigkeit im Zentriernapf ein zuverlässiges Ablösen der ophthalmischen Linse vom Sauggreifer, nachdem dessen Unterdruck an den Saugnäpfen abgeschaltet wurde. Durch die entsprechende Form des Zentriernapfes wird die vom Sauggreifer abgelöste ophthalmische Linse beim Absinken auf den Boden des Zentriernapfes selbsttätig zentriert. Aus dieser Zentrierposition heraus kann sie mit einem weiteren, kleineren Sauggreifer angehoben und lagegenau in die Ziel- bzw. Endverpackung überführt werden.

Je nach Form des Bereitstellungsnapfes bzw. dessen Napfboden kann es zweckmäßig sein, die gerundete Fläche, auf der die Saugnäpfe angeordnet sind, in ihrer Form bzw. in ihrem Verlauf an die Form des Bereitstellungsnapfes anzupassen. Bevorzugt ist die konvex gerundete Fläche, auf der die Saugnäpfe angeordnet sind, eine Kugelkalotte. Dies ist insbesondere dann vorteilhaft, wenn auch der Napfboden des Bereitstellungsnapfes eine Kugelkalotte ist. Hierdurch wird erreicht, dass unabhängig von der zufälligen Lage der ophthalmischen Linse im Bereitstellungsnapf immer die gleichen Ansaugverhältnisse herrschen. Zweckmäßig weist die konvex gerundete Fläche einen ersten Wölbungsradius auf, während der Napfboden des Bereitstellungsnapfes einen dritten Wölbungsradius aufweist. Dabei ist für den Sauggreifer eine Eintaucharbeitstiefe in den Bereitstellungsnapf vorgesehen, wobei der erste Wölbungsradius der konvex gerundeten Fläche des Sauggreifers um so viel kleiner ist als der dritte Wölbungsradius des Napfbodens, dass bei Erreichen der Eintaucharbeitstiefe ein für mehrere und insbesondere für alle Saugnäpfe zumindest näherungsweise gleicher Abstand zum Napfboden vorhanden ist. Aus diesem gleichen Abstand folgt dann auch ein immer gleicher Abstand zu der ophthalmischen Linse unabhängig von deren zufälligen Lage. Damit ist in allen Lagen der ophthalmischen Linse ein zuverlässiges Ansaugen und Halten am Sauggreifer sichergestellt.

Nach der Erfindung sind mindestens eine und insbesondere mehrere Saugöffnungen abseits der Saugnäpfe im Saugkopf angeordnet. Hierdurch wird ein zuverlässiges Absaugen von überschüssiger Flüssigkeit unterstützt. Zweckmäßig sind die Saugöffnungen abseits der Saugnäpfe gegenüber den Saugöffnungen in den Saugnäpfen radial zurückversetzt angeordnet. Dies stellt sicher, dass die radial zurückversetzten Saugöffnungen nicht durch die an den Saugnäpfen anhaftende ophthalmische Linse abgedeckt werden und damit zuverlässig ihre Absaugwirkung auf die Flüssigkeit ausüben können.

Es kann zweckmäßig sein, verschiedene Saugöffnungen bzw. verschiedene Gruppen davon mit unterschiedlichen Unterdruckquellen zu speisen. Bevorzugt ist ein zentraler Saugkanal im Sauggreifer angeordnet, der verzweigt in die Saugöffnungen der Saugnäpfe und auch in die Saugöffnungen abseits der Saugnäpfe mündet. Über den zentralen Saugkanal werden bei konstruktiv einfachem Aufbau sämtliche Saugöffnungen vom Unterdruck der gleichen Unterdruckquelle beaufschlagt. Bei entsprechender Auslegung der Unterdruckquelle in Verbindung mit der Dimensionierung der Saugöffnungen wird gleichzeitig einerseits ein zuverlässiges Ansaugen und Festhalten der angesogenen ophthalmischen Linse sichergestellt und andererseits ein wirkungsvolles Absaugen von Flüssigkeit ermöglicht.

Für eine zuverlässige Handhabung einer einzelnen ophthalmischen Linse kann es ausreichen, dass nur ein einzelner Saugnapf mit der ophthalmischen Linse in Berührung kommt. Bevorzugt sind die Saugnäpfe mit einer Flächendichte derart angeordnet, dass mindestens drei Saugnäpfe auf einer Kreisfläche mit einer zweiten Grundfläche liegen, wobei diese zweite Grundfläche ≤ einer ersten Grundfläche der ophthalmischen Linse ist. Hierdurch wird erreicht, dass die angesaugte ophthalmische Linse zuverlässig von mehreren Saugnäpfen gehalten wird. Bevorzugt spannen die mindestens drei auf der Kreisfläche liegenden Saugnäpfe ein Dreieck auf, dessen Innenwinkel > 0° und < 180° sind. Mit anderen Worten liegen diese drei Saugnäpfe nicht auf einer gemeinsamen Geraden bzw. auf einem gemeinsamen Meridian der konvex gerundeten Fläche. Im angesaugten Zustand liegt die ophthalmische Linse an mindestens drei durch die zugeordneten Saugnäpfe definierten Auflagepunkten derart an, dass eine exakte Lagefixierung in allen räumlichen Freiheitsgraden sichergestellt ist.

In einer bevorzugten Ausführungsform weist die konvex gerundete Fläche, auf der die Saugnäpfe angeordnet sind, einen ersten Wölbungsradius auf, während die ophthalmische Linse eine konkav gewölbte Innenseite mit einem zweiten Wölbungsradius aufweist. Dabei ist der erste Wölbungsradius ≥ dem zweiten Wölbungsradius. Dies vereinfacht eine Anlage der angesaugten ophthalmischen Linse an mehreren Saugnäpfen, wodurch die erzielbare Haltekraft weiter erhöht wird.

Ein Ausführungsbeispiel der Erfindung ist nachfolgend anhand der Zeichnung näher beschrieben. Es zeigen:
- Fig. 1: in einer Seitenansicht einen erfindungsgemäßen Sauggreifer mit verschiedenen Saugöffnungen, von denen ein Teil in elastischen Saugnäpfen angeordnet ist;
- Fig. 2: eine Längsschnittdarstellung des Sauggreifers nach Fig. 1 mit einer angesaugten, im schematischen Querschnitt dargestellten und an den Saugnäpfen anliegenden Kontaktlinse;
- Fig. 3: eine Stirnansicht des Sauggreifers nach Fig. 2 mit Einzelheiten zur geometrischen Anordnung der Saugnäpfe und einer mittig daran anliegenden Kontaktlinse;
- Fig. 4: in einer Seitenansicht den Sauggreifer nach Fig. 1 im Wechselspiel mit einem Bereitstellungsnapf und einer in zufälliger Lage daran befindlichen Kontaktlinse;
- Fig. 5: in einer Seitenansicht den Sauggreifer nach den Fig. 1 bis 4 beim Ablegen der von ihm angesaugten und transportierten Kontaktlinse in einen Zentriernapf.

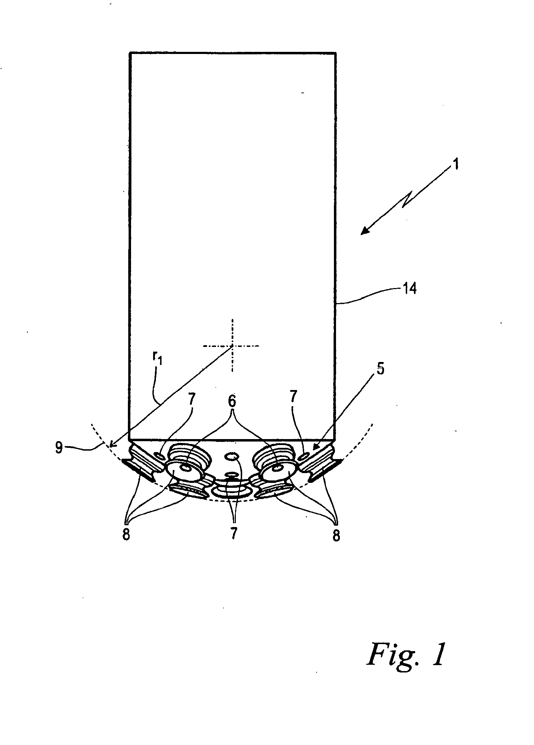

Fig. 1 zeigt in einer Seitenansicht ein Ausführungsbeispiel des erfindungsgemäßen Sauggreifers 1. Der Sauggreifer 1 umfasst einen zylindrischen Schaft 14, an dessen Unterseite sich ein Saugkopf 5 anschließt. Der Sauggreifer 1 ist betriebsbereit und lagerichtig bezogen auf die Schwerkraft dargestellt, demnach der Saugkopf 5 in der Schwerkraftrichtung nach unten weist.

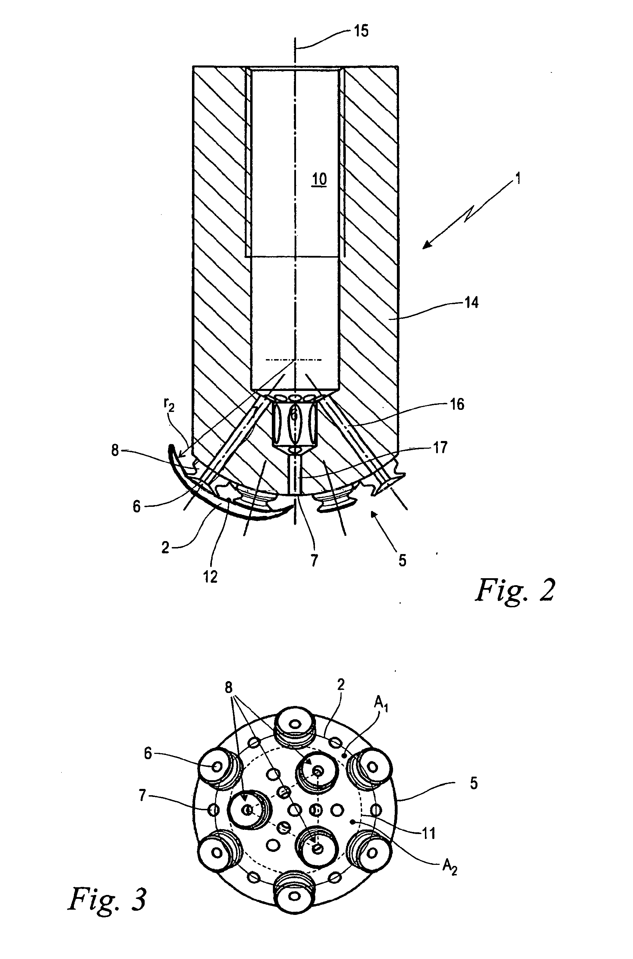

Der Saugkopf 5 umfasst einen Grundkörper, der einteilig am Schaft 14 ausgebildet ist und die Form eines Kugelabschnitts bzw. einer Kugelkalotte aufweist. Des Weiteren ist der Saugkopf 5 mit mehreren Saugöffnungen 6, 7 sowie mit mehreren, im gezeigten Ausführungsbeispiel aus einem elastischen Material bestehenden Saugnäpfen 8 versehen. Die Saugnäpfe 8 können aber auch aus einem harten, steifen Material bestehen, welches beispielsweise härter bzw. steifer als das Material der zu handhabenden Kontaktlinse 2 (Fig. 2) ist. Im letztgenannten Falle können die Saugnäpfe 8 auch einteilig mit dem Grundkörper des Saugkopfes 5 beispielsweise aus Stahl bzw. Edelstahl oder Aluminium gefertigt sein. In jedem einzelnen Saugnapf 8 ist auf dessen radial nach unten weisender Seite je eine Saugöffnung 6 ausgebildet. Abseits der Saugnäpfe 8 sind mindestens einer und hier mehrere weitere Saugöffnungen 7 am Saugkopf 5 angeordnet. Dabei sind diese weiteren Saugöffnungen 7 direkt im Grundkörper des Saugkopfes 5 ausgebildet. Da aber die Saugöffnungen 6 der Saugnäpfe 8 in deren radial äußeren Saugflächen befindlich sind, sind die direkt im Grundkörper des Saugkopfes 5 abseits der Saugnäpfe 8 ausgebildeten Saugöffnungen 7 gegenüber den Saugöffnungen 6 der Saugnäpfe 8 radial zurückversetzt.

Die Saugnäpfe 8 bzw. deren radial äußere Saugflächen sind auf einer konvex gerundeten, durch eine gestrichelte Linie angedeuteten Fläche 9 angeordnet, wobei diese konvex gerundete Fläche 9 im gezeigten bevorzugten Ausführungsbeispiel ein Kugelabschnitt bzw. eine Kugelkalotte ist. Die konvex gerundete Fläche 9, auf der die Saugnäpfe 8 angeordnet sind, weist einen ersten Wölbungsradius r₁ auf.

Der gezeigte Sauggreifer 1 wird für das Umsetzen von ophthalmischen Linsen oder in ihrer Handhabung vergleichbaren Gegenständen verwendet. Die hier in Rede stehenden ophthalmischen Linsen umfassen als nicht abschließende Aufzählung Intraokularlinsen, Kontaktlinsen 2 oder dgl., wobei die Erfindung nachfolgend beispielhaft anhand der Handhabung von Kontaktlinsen 2 beschrieben wird. Demnach wird der gezeigte Sauggreifer 1 für das Umsetzen von Kontaktlinsen 2 aus einem Bereitstellungsnapf 3 in einen Zentriernapf 4 verwendet, wie dies weiter unten im Zusammenhang mit den Fig. 2 bis 5 beschrieben ist. Die beschriebene und zeichnerisch dargestellte Ausführung des Sauggreifers 1, des ihn einschließenden Handhabungssystems mit dem Bereitstellungsnapf 3 und dem Zentriernapf 4, sowie seine Verwendung für das Umsetzen von Kontaktlinsen 2 aus einem Bereitstellungsnapf 3 in einen Zentriernapf 4 gilt aber auch in analoger Weise für andere ophthalmische Linsen oder vergleichbare Gegenstände.

Fig. 2 zeigt den Sauggreifer 1 nach Fig. 1 in einem Längsschnitt, demnach sich der Sauggreifer 1 entlang einer Längsachse 15 erstreckt. Koaxial zur Längsachse 15 ist mittig im Schaft 14 ein zentraler Saugkanal 10 ausgebildet, von dem im Bereich des Saugkopfes 5 Zweigkanäle 16, 17 abzweigen. Die Zweigkanäle 16 verbinden die in den Saugnäpfen 8 ausgebildeten Saugöffnungen 6 mit dem zentralen Saugkanal 10, während die Zweigkanäle 17 die im Grundkörper des Saugkopfes 5 ausgebildeten Saugöffnungen 7 mit dem zentralen Saugkanal 10 verbinden. Im Betrieb ist der zentrale Saugkanal 10 mit einer nicht dargestellten Unterdruck- bzw. Vakuumquelle verbindbar, so dass bei Bedarf an den Saugöffnungen 6, 7 ein Unterdruck bzw. ein Vakuum anliegt. Diese Verbindung kann auch getrennt werden, womit dann eine Belüftung bzw. ein Druckausgleich des Saugkanals 10 sowie der Zweigkanäle 16, 17 einhergeht.

Fig. 2 zeigt des Weiteren eine schematisch im Querschnitt dargestellte Kontaktlinse 2 mit einer konkav gewölbten Innenseite 12, wobei die Kontaktlinse 2 mit ihrer konkav gewölbten Innenseite 12 an mindestens einem, hier mehreren Saugnäpfen 8 unter Einwirkung des über die Saugöffnungen 6 aufgebrachten Unterdruckes anliegt bzw. anhaftet. Die konkav gewölbte Innenseite 12 der Kontaktlinse 2 weist einen zweiten Wölbungsradius r₂ auf, wobei der in Fig. 1 dargestellte erste Wölbungsradius r₁ der konvex gerundeten Fläche 9 ≥ dem zweiten Wölbungsradius r₂ der Kontaktlinse 2 ist. Aus der Zusammenschau der Fig. 1 und 2 kann erkannt werden, dass hierdurch die Kontaktlinse 2 an mindestens einem und bevorzugt mehreren Saugnäpfen 8 anhaften kann.

Fig. 3 zeigt in einer Stirnansicht den Sauggreifer 1 nach den Fig. 1 und 2, wobei der Saugkopf 5 in einer Draufsicht dargestellt ist. Dabei ist zu erkennen, dass insgesamt neun Saugnäpfe 8 mit den zugehörigen Saugöffnungen 6 und insgesamt dreizehn abseits davon angeordnete Saugöffnungen 7 vorgesehen sind. Es kann aber auch eine abweichende Anzahl von Saugöffnungen 6 und/oder Saugöffnungen 7 zweckmäßig sein.

Entgegen der Darstellung nach Fig. 2 ist hier der besseren Übersichtlichkeit halber eine klarsichtige Kontaktlinse 2 mittig bzw. konzentrisch zum Saugkopf 5 dargestellt, wobei die Kontaktlinse 2 eine kreisförmige erste Grundfläche A₁ aufweist. Die Saugnäpfe 8 sind in einem regelmäßigen geometrischen Muster derart angeordnet, dass sich eine bestimmte mittlere Flächendichte der Saugnäpfe 8 einstellt. Um drei beliebige Saugnäpfe 8, hier um die drei mittigen Saugnäpfe 8, lässt sich eine gedachte, gestrichelt dargestellte Kreisfläche 11 definieren. Die vorgenannte Flächendichte der Saugnäpfe 8 ist derart gewählt, dass die die mindestens drei Saugnäpfe 8 einschließende Kreisfläche 11 eine zweite Grundfläche A₂ aufweist, wobei die zweite Grundfläche A₂ ≤ der ersten Grundfläche A₁ der Kontaktlinse 2 ist. Aus der Stirnansicht nach Fig. 3 und den vorgenannten Ausführungen ergibt sich, dass die nach Fig. 2 angesaugte Kontaktlinse 2 unabhängig von ihrer Ausgangslage an immer mindestens drei oder mehr Saugnäpfen 8 anliegt. Natürlich liegt es aber auch im Rahmen der Erfindung, eine geringere Flächendichte von Saugnäpfen 8 zu wählen, so dass die Kontaktlinse 2 möglicherweise an nur zwei oder vielleicht sogar an nur einem Saugnapf 8 zu liegen kommt. Weiter ist in Fig. 3 zu erkennen, dass die mindestens drei auf der Kreisfläche 11 liegenden Saugnäpfe 8 ein Dreieck aufspannen. Bei der gezeigten Auswahl der Saugnäpfe 8 ist dieses gestrichelt angedeutete Dreieck ein gleichschenkliges Dreieck, kann aber auch eine abweichende Form aufweisen. Bevorzugt ist ein solches Dreieck aber derart zu wählen, dass seine Innenwinkel > 0° und < 180° sind, in dessen Folge das Dreieck eine Fläche > 0 aufweist. Hierdurch wird eine räumlich exakte Lagefixierung der angesaugten Kontaktlinse 2 an den mindestens drei Saugnäpfen 8 sichergestellt. Die vorgenannten Bedingungen gelten im Übrigen nicht nur für die hier gezeigten drei mittleren Saugnäpfe 8, sondern auch für jede beliebige Auswahl von drei benachbarten Saugnäpfen 8, so dass gleiche Ansaug- und Haftbedingungen für die aus beliebigen räumlichen Lagen angesaugte Kontaktlinse 2 bestehen.

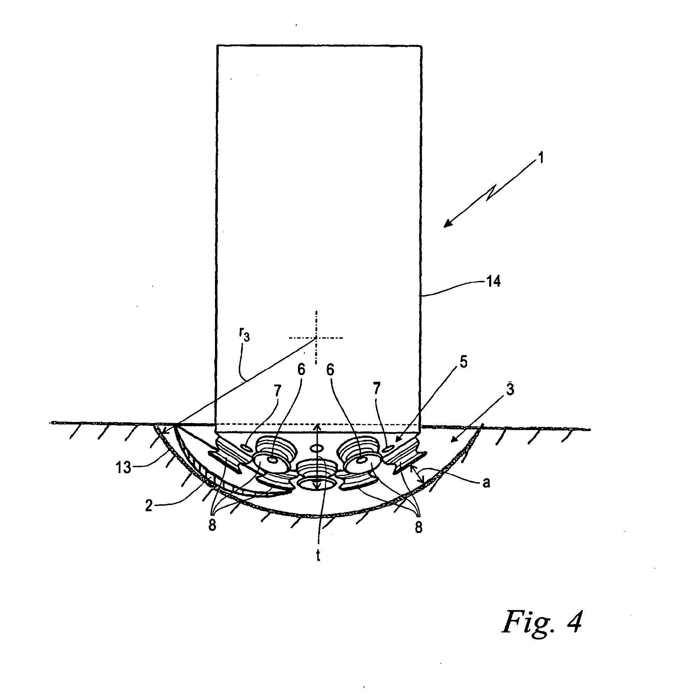

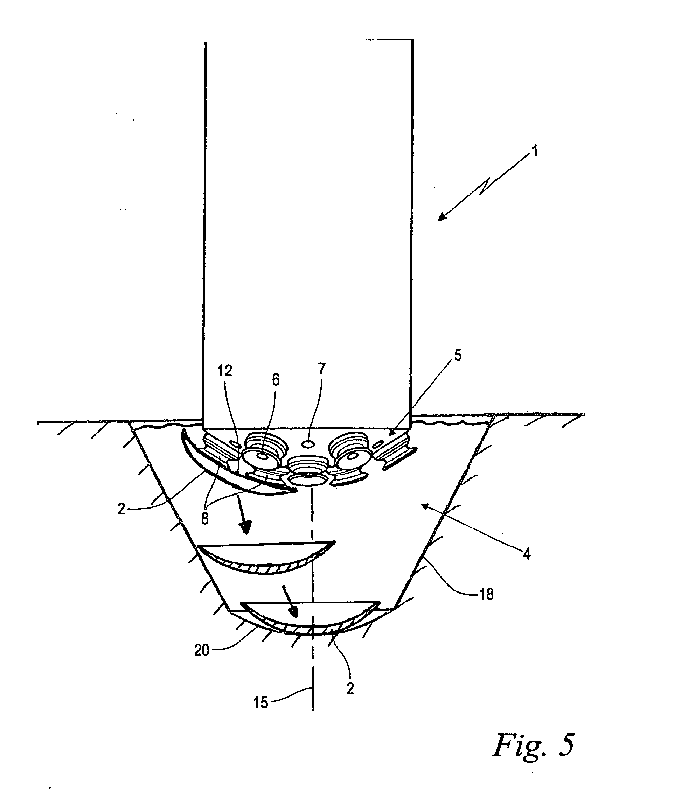

Die Fig. 4 und 5 zeigen den erfindungsgemäßen Sauggreifer 1 nach den Fig. 2 bis 3 bei der Verwendung für das Umsetzen einer Kontaktlinse 2 aus einem Bereitstellungsnapf 3 in einen Zentriernapf 4. Entsprechend der Darstellung nach Fig. 4, in der der Bereitstellungsnapf 3 schematisch in einer Querschnittsdarstellung gezeigt ist, weist der Bereitstellungsnapf 3 einen konvex gerundeten Napfboden 13 in Form eines Kugelabschnitts bzw. einer Kugelkalotte mit einem dritten Wölbungsradius r₃ auf. Außerdem liegt im Bereitstellungsnapf 3 eine einzelne Kontaktlinse 2 mit ihrer konvex gerundeten Außenseite auf dem Napfboden 13 auf. Der Bereitstellungsnapf 3 kann je nach Anwendungsfall oder Verfahrensschritt eine Flüssigkeitsfüllung aufweisen oder auch nicht. Im gezeigten Ausführungsbeispiel bzw. im gezeigten Verfahrensschritt ist eine solche Flüssigkeitsfüllung nicht vorgesehen. Aufgrund der insgesamt feuchthaltenden Handhabung der Kontaktlinse 2 kann sich aber auf ihrer konkaven Innenseite Restflüssigkeit angesammelt haben. Der Innendurchmesser des Bereitstellungsnapfes 3 ist erheblich größer als, hier mehr als doppelt so groß wie der Durchmesser der Kontaktlinse 2. Eine Begleiterscheinung davon ist, dass die Kontaktlinse 2 in einer beliebigen, im Regelfall nicht zentrierten Position innerhalb des Bereitstellungsnapfes 3 zu liegen kommt. Beispielhaft ist in Fig. 4 dargestellt, dass die Kontaktlinse 2 im radial äußeren Randbereich des Bereitstellungsnapfes 3 auf dem Napfboden 13 aufliegt. Allerdings kann die Kontaktlinse 2 auch jede beliebige andere Position innerhalb des Bereitstellungsnapfes 3 annehmen.

Für den Sauggreifer 1 ist eine maximale Eintaucharbeitstiefe t in den Bereitstellungsnapf 3 vorgesehen, mittels derer das unterste Ende des Sauggreifers 1 relativ zum oberen Rand des Bereitstellungsnapfes 3 in den Bereitstellungsnapf 3 eingeführt wird. Der in Fig. 1 dargestellte erste Wölbungsradius r1 der konvex gerundeten Fläche 9 des Sauggreifers 1 ist um so viel kleiner als der dritte Wölbungsradius r₃ des Napfbodens 13, dass bei Erreichen der Eintaucharbeitstiefe t ein für mehrere, im gezeigten Ausführungsbeispiel für alle Saugnäpfe 8 zumindest näherungsweise gleicher Abstand a zum Napfboden 13 vorhanden ist. Dabei wird der Abstand a senkrecht zur radial äußeren Saugfläche der Saugnäpfe 8 bzw. senkrecht zum angrenzenden Abschnitt des Napfbodens 13 in Richtung einer Flächennormalen gemessen. Sofern ein Bereitstellungsnapf 3 zum Einsatz kommt, dessen Napfboden 13 vom gezeigten bevorzugten Ausführungsbeispiel abweicht und keine Form einer Kugelkalotte aufweist, ist die Anordnung der Saugnäpfe 8 am Sauggreifer 1 derart an die tatsächliche Form des Napfbodens 13 anzupassen, dass sich bei Erreichen der Eintaucharbeitstiefe t der oben beschriebene, zumindest näherungsweise gleiche Abstand a einstellt.

Das zugehörige erfindungsgemäße Handhabungssystem umfasst neben dem Sauggreifer 1 einen zugeordneten Bereitstellungsnapf 3 nach Fig. 4, einen zugeordneten Zentriernapf 4 nach Fig. 5 sowie eine einzelne Kontaktlinse 2 nach den Fig. 2 bis 5. In der praktischen Anwendung ist eine Vielzahl von Bereitstellungsnäpfen 3 beispielsweise matrixförmig in einem sogenannten Tray angeordnet, wobei in jedem einzelnen Bereitstellungsnapf 3 je eine einzelne Kontaktlinse 2 zu liegen kommt. Darüber hinaus ist jedem einzelnen Bereitstellungsnapf 3 mit der Kontaktlinse 2 je ein Sauggreifer 1 und je ein Zentriernapf 4 (Fig. 5) zugeordnet, was insgesamt das erfindungsgemäße Handhabungssystem bildet. Es können aber auch solche Ausführungsformen zweckmäßig sein, bei denen nur ein einzelner Sauggreifer oder eine kleinere Anzahl davon eine größere Anzahl von Bereitstellungsnäpfen 3, Kontaktlinsen 2 und Zentriernäpfen 4 bedient.

Nach der erfindungsgemäßen Verwendung wird der Sauggreifer 1 entsprechend der Darstellung nach Fig. 4 zunächst mit der Eintaucharbeitstiefe t in den Bereitstellungsnapf 3 abgesenkt. In der Folge bildet sich zwischen den Saugnäpfen 8 und dem Napfboden 13 jeweils der vorstehend beschriebene Abstand a aus. Da außerdem zwar die Lage der Kontaktlinse 2 im Bereitstellungsnapf 3 beliebig ist, die Kontaktlinse 2 aber immer auf dem Napfboden 13 aufliegt, hat die Kontaktlinse 2 unabhängig von ihrer tatsächlichen Lage immer einen fest definierten Abstand zu den ihr zugewandten Saugnäpfen 8. Unabhängig von der tatsächlichen und zufälligen Lage der Kontaktlinse 2 herrschen also immer die gleichen Ansaugbedingungen für die Kontaktlinse 2 an den ihr zugewandten Saugnäpfen 8.

Ausgehend von der abgesenkten Position des Saugnapfes 1 nach Fig. 4 wird der zentrale Saugkanal 10 (Fig. 2) mit einer Unterdruck- bzw. Vakuumquelle verbunden, so dass eine Saugwirkung an den Saugöffnungen 6, 7 eintritt. Diese führt an den benachbart zur Kontaktlinse 2 liegenden Saugnäpfen 8 dazu, dass die auf dem Napfboden 13 aufliegende Kontaktlinse 2 hiervon angesaugt wird und an diesen Saugnäpfen 8 entsprechend der Darstellung nach den Fig. 2 und 3 anhaftet. Durch die übrigen, nicht durch die entsprechend der Darstellung nach Fig. 2 abgedeckten, aber ebenfalls mit Unterdruck beaufschlagten Saugöffnungen 6, 7 wird möglicherweise vorhandene Flüssigkeit, beispielsweise Restflüssigkeit aus der konkaven Seite der Kontaktlinse 2 abgesaugt.

Zusammen mit der angesaugten Kontaktlinse 2 wird der Sauggreifer 1 anschließend entsprechend der Darstellung nach Fig. 2 angehoben, zum Zentriernapf 4 (Fig. 5) verfahren und entsprechend der Darstellung nach Fig. 5 in den Zentriernapf 4 abgesenkt. Der Zentriemapf 4 ist entsprechend der Darstellung nach Fig. 5 mit einer Flüssigkeit gefüllt.

Bevor aber der Sauggreifer 1 entsprechend der Darstellung nach Fig. 5 in den Zentriernapf 4 abgesenkt wird, bevor also die Kontaktlinse 2 und die Saugnäpfe 8 in die Flüssigkeit des Zentriernapfes 4 eintauchen, wird der oben genannte Unterdruck bzw. das Haltevakuum an den Saugöffnungen 6, 7 abgeschaltet, sobald sich der Sauggreifer 1 unmittelbar oberhalb des Zentriernapfes 4 bzw. dessen Flüssigkeitsspiegels befindet. Außerdem werden der zentrale Saugkanal 10 und die davon abzweigenden Zweigkanäle 16, 17 (Fig. 2) belüftet, um einen Druckausgleich herbeizuführen. Aufgrund der Haftwirkung der bevorzugt elastischen Saugnäpfe 8 und/oder der elastischen Kontaktlinse 2 bleibt die Kontaktlinse 2 aber dennoch zunächst entsprechend der Darstellung nach Fig. 2 an den Saugnäpfen 8 haften.

Erst nach dem vorstehend beschriebenen Abschalten des Unterdrucks und Herbeiführung des Druckausgleichs wird der Sauggreifer 1 mit seinem Saugkopf 5 und der Kontaktlinse 2 entsprechend der Darstellung nach Fig. 5 in das Flüssigkeitsreservoir des Zentriernapfes 4 abgesenkt. Dabei wird die oben liegende konkave Innenseite 12 der Kontaktlinse 2 von der im Zentriernapf 4 befindlichen Flüssigkeit hinterspült. Dies führt dann schlussendlich zu einem Ablösen der Kontaktlinse 2 von den Saugnäpfen 8, ohne dass an den Saugnäpfen 8 bzw. an den Saugöffnungen 6, 7 ausgeblasen werden müsste. Wie in Fig. 5 zu erkennen, sinkt die Kontaktlinse 2 im Flüssigkeitsreservoir des Zentriernapfes 4 entsprechend dort dargestellter Pfeile nach unten ab und kommt auf einem Zentrierboden 20 des Zentriernapfes 4 zu liegen.

Der Darstellung nach Fig. 5 kann in Zusammenschau mit Fig. 4 noch entnommen werden, dass der Durchmesser des Zentriernapfes 4 im Bereich seiner oberen Öffnung etwa dem Durchmesser des Bereitstellungsnapfes 3 im Bereich dessen oberer Öffnung entspricht. Die obere Öffnung des Zentriernapfes 4 ist also hinreichend groß, so dass der Sauggreifer 1, dessen Durchmesser wiederum größer ist als derjenige der Kontaktlinse 2, von oben in den Zentriernapf 4 eingeführt werden kann. Ausgehend von der oberen Öffnung des Zentriernapfes 4 schließt sich unterhalb davon eine Umfangswand 18 des Zentriernapfes 4 an, die im gezeigten Ausführungsbeispiel konisch geformt ist, aber auch eine andere Form aufweisen kann. In jedem Falle aber ist die Umfangswand 18 derart geformt, dass sich der Querschnitt des Zentriernapfes 4 in Schwerkraftrichtung von oben nach unten verengt und dabei einen Durchmesser annimmt, der kleiner ist als derjenige des Saugkopfes 5, aber größer als derjenige der Kontaktlinse 2. Der Aufnahmeraum des Zentriernapfes 4 ist nach unten mittels eines konkav gewölbten Zentrierbodens 20 verschlossen, auf dem die Kontaktlinse 2 zu liegen kommt. Weiter kann der Fig. 5 entnommen werden, dass die vom Saugkopf 5 abfallende Kontaktlinse 2 entlang der nach unten zulaufenden oberen Umfangswand 18 hinab auf den Zentrierboden 20 gleitet und dadurch bezüglich der gemeinsamen Längsachse 15 des Zentriernapfes 4 und des Sauggreifers 1 zentriert wird.

Im Anschluss an den vorstehend beschriebenen Zentriervorgang wird die auf dem Zentrierboden 20 liegende Kontaktlinse 2 mit einem nicht dargestellten weiteren Sauggreifer aufgenommen, wobei dieser weitere Sauggreifer im Vergleich zum erfindungsgemäßen Sauggreifer 1 einen derart verringerten Durchmesser hat, dass er einerseits in den unteren eingeengten, die abgesunkene Kontaktlinse 2 aufnehmenden Bereich abgesenkt werden kann, und dass er andererseits die Kontaktlinse 2 in einen ebenfalls nicht dargestellten, in seinen Maßen etwa der Kontaktlinse 2 entsprechenden Behälter bzw. in einer entsprechenden Zielverpackung ablegen kann.

Aus den vorstehenden Ausführungen ergibt sich, dass der Zielbehälter nur unwesentlich größer als die verpackungsfertige Kontaktlinse 2 ist, während der Bereitstellungsnapf 3 im Vergleich dazu viel größer ist. Der zwischengeschaltete Zentrierbehälter 4 weist im Bereich seiner oberen Öffnung einen großen Querschnitt auf, der zumindest näherungsweise dem großen Querschnitt des Bereitstellungsnapfes 3 entspricht. Außerdem weist der Zentrierbehälter 4 im Bereich seines Zentrierbodens einen kleineren Querschnitt auf, der zumindest näherungsweise dem Durchmesser der Kontaktlinse 2 und des Zielbehälters entspricht. Der erfindungsgemäße Sauggreifer hat in Rücksicht auf die ungeordnete Lage der Kontaktlinse 2 im Bereitstellungsnapf 3 entsprechend der Darstellung nach Fig. 4 einen im Vergleich zur Kontaktlinse 2 und zum Ziel- bzw. Verpackungsbehälter größeren Durchmesser und ist deshalb für die direkte Ablage der Kontaktlinse 2 im Zielbehälter nicht geeignet ist. Durch den Zwischenschritt der Ablage der Kontaktlinse 2 im Zentrierbehälter 4 werden aber die begleitenden Probleme überwunden: Der im Vergleich zur verpackungsfertigen Kontaktlinse größere Sauggreifer 1 kann die ungeordnet liegende Kontaktlinse 2 aus dem Bereitstellungsnapf 3 betriebssicher anheben und in den Zentriernapf 4 überführen. Gleichzeitig wird durch die Absaugung von Restflüssigkeit ein Verschleppen dieser Restflüssigkeit in die Flüssigkeit des Zentriernapfes 4 unterbunden. Hieraus kann dann die zentrierte Kontaktlinse 2 mittels des weiteren, kleineren Sauggreifers entnommen und lagegenau im Zielbehälter positioniert werden.

## Patentansprüche

1. Sauggreifer (1) für das Umsetzen von ophthalmischen Linsen, insbesondere von Kontaktlinsen (2) aus einem Bereitstellungsnapf (3) in einen Zentriernapf (4), umfassend einen Saugkopf (5) mit mehreren Saugöffnungen (6, 7) und mit mehreren Saugnäpfen (8), wobei die Saugnäpfe (8) auf einer konvex gerundeten Fläche (9) angeordnet sind, und wobei zumindest ein Teil der Saugöffnungen (6) in den Saugnäpfen (8) angeordnet ist,
**dadurch gekennzeichnet, dass** mindestens eine Saugöffnung (7) abseits der Saugnäpfe (8) am Saugkopf (5) angeordnet ist.

2. Sauggreifer nach Anspruch 1,
**dadurch gekennzeichnet, dass** die konvex gerundete Fläche (9), auf der die Saugnäpfe (8) angeordnet sind, eine Kugelkalotte ist.

3. Sauggreifer nach Anspruch 1 oder 2,
**dadurch gekennzeichnet, dass** mehrere Saugöffnungen (7) abseits der Saugnäpfe (8) am Saugkopf (5) angeordnet sind.

4. Sauggreifer nach Anspruch 3,
**dadurch gekennzeichnet, dass** die Saugöffnungen (7) abseits der Saugnäpfe (8) gegenüber den Saugöffnungen (6) in den Saugnäpfen (8) radial zurück versetzt angeordnet sind.

5. Sauggreifer nach einem der Ansprüche 1 bis 4,
**dadurch gekennzeichnet, dass** ein zentraler Saugkanal (10) im Sauggreifer (1) angeordnet ist und verzweigt in die Saugöffnungen (6) der Saugnäpfe (8) und auch in die Saugöffnungen (7) abseits der Saugnäpfe (8) mündet.

6. Handhabungssystem für ophthalmische Linsen, insbesondere für Kontaktlinsen (2), umfassend die ophthalmischen Linsen, einen Bereitstellungsnapf (3), einen Zentriernapf (4) sowie einen Sauggreifer (1) nach einem der Ansprüche 1 bis 5.

7. Handhabungssystem nach Anspruch 6,
**dadurch gekennzeichnet, dass** die ophthalmische Linse eine erste Grundfläche (A₁) aufweist, wobei die Saugnäpfe (8) mit einer Flächendichte derart angeordnet sind, dass mindestens drei Saugnäpfe (8) auf einer Kreisfläche (11) mit einer zweiten Grundfläche (A₂) liegen, und wobei die zweite Grundfläche (A₂) ≤ der ersten Grundfläche (A₁) ist.

8. Handhabungssystem nach Anspruch 7,
**dadurch gekennzeichnet, dass** die mindestens drei auf der Kreisfläche (11) liegenden Saugnäpfe (8) ein Dreieck aufspannen, dessen Innenwinkel größer 0° und kleiner 180° sind.

9. Handhabungssystem nach einem der Ansprüche 6 bis 8,
**dadurch gekennzeichnet, dass** die konvex gerundete Fläche (9), auf der die Saugnäpfe (8) angeordnet sind, einen ersten Wölbungsradius (r₁) aufweist, dass die ophthalmische Linse eine konkav gewölbte Innenseite (12) mit einem zweiten Wölbungsradius (r₂) aufweist, und dass der erste Wölbungsradius (r₁) ≥ dem zweiten Wölbungsradius (r₂) ist.

10. Handhabungssystem nach einem der Ansprüche 6 bis 9,
**dadurch gekennzeichnet, dass** der Bereitstellungsnapf (3) einen konvex gerundeten Napfboden (13) mit einem dritten Wölbungsradius (r₃) aufweist, wobei für den Sauggreifer (1) eine Eintaucharbeitstiefe (t) in den Bereitstellungsnapf (3) vorgesehen ist, und wobei der erste Wölbungsradius (r₁) der konvex gerundeten Fläche (9) des Sauggreifers (1) um soviel kleiner ist als der dritte Wölbungsradius (r₃) des Napfbodens (13), dass bei Erreichen der Eintaucharbeitstiefe (t) ein für mehrere und insbesondere für alle Saugnäpfe (8) zumindest näherungsweise gleicher Abstand (a) zum Napfboden (13) vorhanden ist.

11. Verwendung eines Sauggreifers (1) nach einem der Ansprüche 1 bis 5 für das Umsetzen von ophthalmischen Linsen, insbesondere von Kontaktlinsen (2) aus einem Bereitstellungsnapf (3) in einen Zentriemapf (4).

12. Verwendung nach Anspruch 11 in einem Handhabungssystem nach einem der Ansprüche 6 bis 10.

## Claims

1. Vacuum gripper (1) for transferring ophthalmic lenses, in particular contact lenses (2), from a provision cup (3) into a centring cup (4), comprising a suction head (5) with a plurality of suction ports (6, 7) and with a plurality of suckers (8), wherein the suckers (8) are arranged on a convexly rounded surface (9) and wherein at least a part of the suction ports (6) is located in the suckers (8),
**characterised in that** at least one suction port (7) is located away from the suckers (8) on the suction head (5).

2. Vacuum gripper according to claim 1,
**characterised in that** the convexly rounded surface (9) on which the suckers (8) are arranged is a spherical cap.

3. Vacuum gripper according to claim 1 or 2,
**characterised in that** several suction ports (7) are located away from the suckers (8) on the suction head (5).

4. Vacuum gripper according to claim 3,
**characterised in that** the suction ports (7) located away from the suckers (8) are offset radially backwards in respect to the suction ports (6) in the suckers (8).

5. Vacuum gripper according to any of claims 1 to 4,
**characterised in that** a central suction passage (10) is provided in the vacuum gripper (1) and branches out to terminate into the suction ports (6) of the suckers (8) and into the suction parts (7) located away from the suckers (8).

6. Handling system for ophthalmic lenses, in particular contact lenses (2), comprising the ophthalmic lenses, a provision cup (3), a centring cup (4) and a vacuum gripper (1) according to any of claims 1 to 5.

7. Handling system according to claim 6,
**characterised in that** the ophthalmic lens has a first base surface (A₁), wherein the suckers (8) are arranged with an areal density in such a way that at least three suckers (8) lie on a circle area (11) with a second base surface (A₂), and wherein the second base surface (A₂) is ≤ the first base surface (A₁).

8. Handling system according to claim 7,
**characterised in that** the at least three suckers (8) lying on the circle area (11) define a triangle having an interior angle greater than 0° and smaller than 180°.

9. Handling system according to any of claims 6 to 8,
**characterised in that** the convexly rounded surface (9) on which the suckers (8) are arranged has a first radius of curvature (r₁), **in that** the ophthalmic lens has a concavely domed inside (12) with a second radius of curvature (r₂), and **in that** the first radius of curvature (r₁) is ≥ the second radius of curvature (r₂).

10. Handling system according to any of claims 6 to 9,
**characterised in that** the provision cup (3) has a convexly rounded cup base (13) with a third radius of curvature (r₃), wherein a dipping-in depth (t) into the provision cup (3) is provided for the vacuum gripper (1), and wherein the first radius of curvature (r₁) of the convexly rounded surface (9) of the vacuum gripper (1) is smaller than the third radius of curvature (r₃) of the cup base (13) to such an extent that, when the dipping-in depth (t) is reached, several and in particular all suckers (8) are at an at least approximately identical distance (a) from the cup base (13).

11. Use of a vacuum gripper 1 according to any of claims 1 to 5 for transferring ophthalmic lenses, in particular contact lenses (2), from a provision cup (3) into a centring cup (4).

12. Use according to claim 11 in a handling system according to any of claims 6 to 10.

## Revendications

1. Organe de préhension aspirant (1) pour le transfert de lentilles ophtalmiques, en particulier de lentilles de contact (2), d'un godet de préparation (3) vers un godet de centrage (4), comprenant une tête d'aspiration (5) avec plusieurs ouvertures d'aspiration (6, 7) et avec plusieurs ventouses (8), étant précisé que les ventouses (8) sont disposées sur une surface arrondie convexe (9) et qu'une partie au moins des ouvertures d'aspiration (6) sont disposées dans les ventouses (8),
**caractérisé en ce qu'**au moins une ouverture d'aspiration (7) est disposée sur la tête d'aspiration (5) à une certaine distance des ventouses (8).

2. Organe de préhension aspirant selon la revendication 1,
**caractérisé en ce que** la surface arrondie convexe (9) sur laquelle sont disposées les ventouses (8) est constituée par une calotte sphérique.

3. Organe de préhension aspirant selon la revendication 1 ou 2,
**caractérisé en ce que** plusieurs ouvertures d'aspiration (7) sont disposées sur la tête d'aspiration (5) à une certaine distance des ventouses (8).

4. Organe de préhension aspirant selon la revendication 3,
**caractérisé en ce que** les ouvertures d'aspiration (7) prévues à une certaine distance des ventouses (8) sont disposées en retrait radialement par rapport aux ouvertures d'aspiration (6) prévues dans les ventouses (8).

5. Organe de préhension aspirant selon l'une des revendications 1 à 4,
**caractérisé en ce qu'**un conduit d'aspiration central (10) est disposé dans l'organe de préhension aspirant (1) et débouche, en se ramifiant, dans les ouvertures d'aspiration (6) des ventouses (8) et aussi dans les ouvertures d'aspiration (7) prévues à une certaine distance des ventouses (8).

6. Système de manipulation pour lentilles ophtalmiques, en particulier pour lentilles de contact (2), comprenant les lentilles ophtalmiques, un godet de préparation (3), un godet de centrage (4) et un organe de préhension aspirant (1) selon l'une des revendications 1 à 5.

7. Système de manipulation selon la revendication 6,
**caractérisé en ce que** la lentille ophtalmique présente une première surface de base (A₁), étant précisé que les ventouses (8) sont disposées avec une densité superficielle telle qu'au moins trois ventouses (8) se trouvent sur une surface circulaire (11) avec une deuxième surface de base (A₂), et que la deuxième surface de base (A₂) ≤ à la première surface de base (A₁).

8. Système de manipulation selon la revendication 7,
**caractérisé en ce que** les trois ventouses (8), ou plus, situées sur la surface circulaire (11) couvrent un triangle dont l'angle interne est supérieur à 0° et inférieur à 180°.

9. Système de manipulation selon l'une des revendications 6 à 8,
**caractérisé en ce que** la surface arrondie convexe (9) sur laquelle sont disposées les ventouses (8) présente un premier rayon de courbure (r₁), **en ce que** la lentille ophtalmique présente une face intérieure bombée concave (12) avec un deuxième rayon de courbure (r₂), et **en ce que** le premier rayon de courbure (r₁) ≥ au deuxième rayon de courbure (r₂).

10. Système de manipulation selon l'une des revendications 6 à 9,
**caractérisé en ce que** le godet de préparation (3) présente un fond arrondi convexe (13) avec un troisième rayon de courbure (r₃), étant précisé que pour l'organe de préhension aspirant (1), il est prévu une profondeur de travail d'immersion (t) dans le godet de préparation (3), et que le premier rayon de courbure (r₁) de la surface arrondie convexe (9) de l'organe de préhension aspirant (1) est d'autant plus petit que le troisième rayon de courbure (r₃) du fond de godet (13) que lorsque la profondeur de travail d'immersion (t) est atteinte, il est prévu une distance (a) par rapport au fond de godet (13) au moins approximativement égale pour plusieurs et en particulier pour toutes les ventouses (8).

11. Utilisation d'un organe de préhension aspirant (1) selon l'une des revendications 1 à 5 pour le transfert de lentilles ophtalmiques, en particulier de lentilles de contact (2), d'un godet de préparation (3) vers un godet de centrage (4).

12. Utilisation selon la revendication 11 dans un système de manipulation selon l'une des revendications 6 à 10.
